# EUROPEAN PATENT APPLICATION

(11) **EP 3 136 792 A1**
(43) Date of publication of application: **01.03.2017**
(21) Application number: 14904300.2
(22) Date of filing: 23.10.2014
(51) Int. Cl.: H04W 52/02

(54) **DATA RE-SYNCHRONIZATION METHOD AND APPARATUS**

(71) Applicant: Huawei Technologies Co., Ltd., Longgang District Shenzhen, Guangdong 518129 (CN)
(72) Inventor: LI, Guangjun, Shenzhen, Guangdong 518129 (CN)
(74) Representative: Thun, Clemens
(86) International application number: PCT/CN2014/089285
(87) International publication number: WO 2016/061786

(57) **Abstract**

Embodiments of the present invention relate to the field of communications, and provide a data resynchronization method and apparatus, which resolve a problem in the prior art that when a base station performs resynchronization with UE that is in an idle state, a data resynchronization failure occurs because the UE cannot effectively receive a preamble delivered by the base station. The solutions include: when determining to perform downlink communication with user equipment UE, determining, by a base station, a moment at which the UE is in an active state; generating, by the base station, a timing instruction, and delivering the timing instruction to the UE at the moment at which the UE is in an active state, so that the UE remains in an active state within a timing period according to the timing instruction; and performing, by the base station, data resynchronization with the UE within the timing period.

## Description

### TECHNICAL field

The present invention relates to the field of communications, and in particular, to a data resynchronization method and apparatus.

### Background

Out-of-synchronization (that is, loss of synchronization) is a phenomenon that widely exists in a communication process between a base station and UE (User Equipment, user equipment). Especially, in a DRX (Discontinuous Reception, discontinuous reception) operation mode, the UE may be switched between an active state and an idle state (where a period of an active state is much shorter than a period of an idle state). However, the UE can communicate with the base station only when the UE is in an active state, and when the UE is in an idle state, the UE is in a sleep state to save power. In this case, an asynchronous may occur between the base station and the UE.

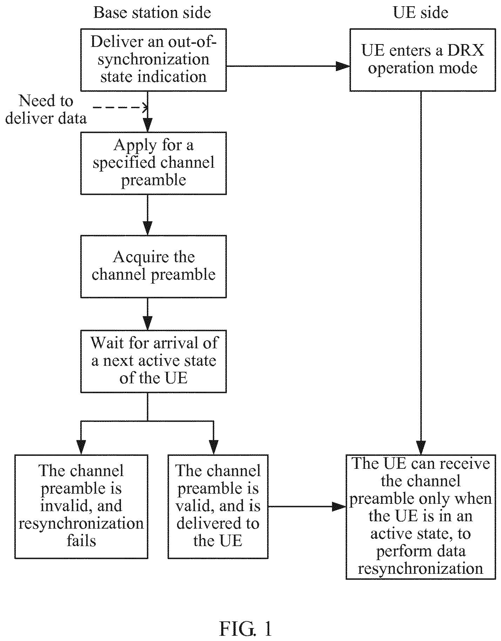

After the UE enters the DRX operation mode, when the base station needs to deliver data to the UE, if out-of-synchronization occurs between the base station and the UE, data resynchronization needs to be performed on the UE, so that the UE is switched from an asynchronous to a synchronized state to communicate with the base station. Specifically, FIG. 1 is a schematic diagram of interaction for resynchronization between a base station and UE. As shown in FIG. 1, after the base station instructs the UE to enter the DRX operation mode, when needing to deliver data to the UE, the base station first acquires a specified channel preamble (preamble), and when waiting for the UE to enter an active state, the base station delivers the preamble to the UE through a PDCCH (Physical Downlink Control Channel, physical downlink control channel), to complete resynchronization with the UE.

However, in the foregoing process, because a period of an active state of the UE is much shorter than that of an idle state of the UE, and the preamble is time-sensitive, if the base station cannot deliver the preamble to the UE in time after acquiring the preamble, the preamble becomes invalid, which leads to a resynchronization failure and further causes a user call drop. On the other hand, because the period of the active state is short or a delay occurs in data receiving and sending between the base station and the UE, when the base station sends a valid preamble to the UE, it is very likely that the UE is not in an active state at this moment, and therefore, the UE cannot receive the preamble, which leads to a resynchronization failure and further causes a user call drop.

### Summary

Embodiments of the present invention provide a data resynchronization method and apparatus, which resolves a problem in the prior art that when a base station performs resynchronization with UE that is in an idle state, a data resynchronization failure may occur because the UE cannot effectively receive a preamble delivered by the base station.

To achieve the foregoing objective, the following technical solutions are used in the embodiments of the present invention.

According to a first aspect, an embodiment of the present invention provides a data resynchronization method, including:
when determining to perform downlink communication with user equipment UE, determining, by a base station, a moment at which the UE is in an active state;
generating, by the base station, a timing instruction, and delivering the timing instruction to the UE at the moment at which the UE is in an active state, so that the UE remains in an active state within a timing period according to the timing instruction; and
performing, by the base station, data resynchronization with the UE within the timing period.

With reference to the first aspect, in a first possible implementation manner of the first aspect, the determining a moment at which the UE is in an active state includes:
determining, by the base station by querying, whether a moment at which the base station performs downlink communication with the UE is in an active period of the UE; and
if the moment is in the active period of the UE, determining, by the base station, that a current moment is the moment at which the UE is in an active state; or
if the moment is not in the active period of the UE, querying, by the base station, for an active period of the UE nearest to the current moment, and using a moment at which the latest active period of the UE arrives as the moment at which the UE is in an active state.

With reference to the first possible implementation manner of the first aspect, in a second possible implementation manner of the first aspect, the generating, by the base station, a timing instruction, and delivering the timing instruction to the UE at the moment at which the UE is in an active state, so that the UE remains in an active state within a timing period according to the timing instruction includes:
generating, by the base station, a physical downlink control channel PDCCH timing instruction; and
sending, by the base station, the PDCCH timing instruction to the UE at the moment at which the UE is in an active state, where
the remaining, by the UE, in an active state within a timing period according to the timing instruction includes:
receiving, by the UE, the PDCCH timing instruction sent by the base station;
disabling, by the UE, a running long timer according to the PDCCH timing instruction, and enabling an extended IA timer with the timing period to perform timing, where the long timer is configured to periodically maintain an active state and an idle state of the UE; and
remaining, by the UE, in an active state within the timing period.

With reference to the second possible implementation manner of the first aspect, in a third possible implementation manner of the first aspect, the performing, by the base station, data resynchronization with the UE within the timing period includes:
acquiring, by the base station, a channel preamble within the timing period;
generating, by the base station, a resynchronization instruction according to the channel preamble, where the resynchronization instruction is used to instruct the UE to perform data resynchronization with the base station; and
sending, by the base station, the resynchronization instruction to the UE through the PDCCH, so that the UE performs data resynchronization with the base station according to the channel preamble in the resynchronization instruction.

With reference to the third possible implementation manner of the first aspect, in a fourth possible implementation manner of the first aspect, before the base station determines to perform downlink communication with the UE, the method further includes:
sending, by the base station, an asynchronous indication to the UE through a UM interface or a UU interface, and triggering the long timer, so that the UE starts the long timer according to the asynchronous indication, and enters an asynchronous discontinuous reception DRX operation mode.

According to a second aspect, an embodiment of the present invention provides a data resynchronization method, including:
receiving, by user equipment UE in an active state, a timing instruction sent by a base station, where the timing instruction is used to instruct the UE to remain in an active state within a timing period;
receiving, by the UE within the timing period, a resynchronization instruction sent by the base station, where the resynchronization instruction is used to instruct the UE to perform data resynchronization with the base station; and
performing, by the UE, the data resynchronization with the base station according to the resynchronization instruction.

With reference to the second aspect, in a first possible implementation manner of the second aspect, after the receiving, by UE in an active state, a timing instruction sent by a base station, the method further includes:
disabling, by the UE, a running long timer according to the timing instruction, and enabling an IA timer with the timing period to perform timing, where the long timer is configured to periodically maintain an active state and an idle state of the UE.

With reference to the first possible implementation manner of the second aspect, in a second possible implementation manner of the second aspect, before the receiving, by UE in an active state, a timing instruction sent by a base station, the method further includes:
receiving, by the UE, an asynchronous indication sent by the base station; and
enabling, by the UE, the long timer according to the asynchronous indication, and entering an asynchronous discontinuous reception DRX operation mode.

According to a third aspect, an embodiment of the present invention provides a base station, including:
a determining unit, configured to: when determining to perform downlink communication with user equipment UE, determine a moment at which the UE is in an active state;
an activation unit, configured to generate a timing instruction, and deliver the timing instruction to the UE at the moment at which the UE is in an active state, so that the UE remains in an active state within a timing period according to the timing instruction; and
a resynchronization unit, configured to perform data resynchronization with the UE within the timing period.

With reference to the third aspect, in a first possible implementation manner of the third aspect,
the determining unit is specifically configured to determine, by querying, whether a moment at which the base station performs downlink communication with the UE is in an active period of the UE; and if the moment is in the active period of the UE, determine that a current moment is the moment at which the UE is in an active state; or if the moment is not in the active period of the UE, query for an active period of the UE nearest to the current moment, and use a moment at which the latest active period of the UE arrives as the moment at which the UE is in an active state.

With reference to the first possible implementation manner of the third aspect, in a second possible implementation manner of the third aspect,
the activation unit is specifically configured to generate a physical downlink control channel PDCCH timing instruction; and send the PDCCH timing instruction to the UE at the moment at which the UE is in an active state.

With reference to the second possible implementation manner of the third aspect, in a third possible implementation manner of the third aspect,
the resynchronization unit is specifically configured to acquire a channel preamble within the timing period; generate a resynchronization instruction according to the channel preamble, where the resynchronization instruction is used to instruct the UE to perform data resynchronization with the base station; and send the resynchronization instruction to the UE through a PDCCH, so that the UE performs data resynchronization with the base station according to the channel preamble in the resynchronization instruction.

With reference to the third possible implementation manner of the third aspect, in a fourth possible implementation manner of the third aspect,
the sending unit is configured to send an asynchronous indication to the UE through a UM interface or a UU interface, and trigger the long timer, so that the UE starts the long timer according to the asynchronous indication, and enters an asynchronous discontinuous reception DRX operation mode.

According to a fourth aspect, an embodiment of the present invention provides user equipment UE, including:
a receiving unit, configured to receive, in an active state, a timing instruction sent by a base station, where the timing instruction is used to instruct the UE to remain in an active state within a timing period; and receive, within the timing period, a resynchronization instruction sent by the base station, where the resynchronization instruction is used to instruct the UE to perform data resynchronization with the base station; and
a resynchronization unit, configured to perform data resynchronization with the base station according to the resynchronization instruction in the receiving unit.

With reference to the fourth aspect, in a first possible implementation manner of the fourth aspect, the UE further includes an activation unit, where
the activation unit is configured to disable a running long timer according to the timing instruction, and enable an IA timer with the timing period to perform timing, where the long timer is configured to periodically maintain an active state and an idle state of the UE.

With reference to the first possible implementation manner of the fourth aspect, in a second possible implementation manner of the fourth aspect,
the receiving unit is further configured to receive an asynchronous indication sent by the base station; and
the resynchronization unit is further configured to enable the long timer according to the asynchronous indication in the receiving unit, and enter an asynchronous discontinuous reception DRX operation mode.

According to a fifth aspect, an embodiment of the present invention provides a base station, including a processor, and a transceiver and an IA timer that are both connected to the processor, where
when determining to perform downlink communication with user equipment UE, the processor determines a moment at which the UE is in an active state;
the processor invokes the IA timer to generate a timing instruction, and delivers, by using the transceiver, the timing instruction to the UE at the moment at which the UE is in an active state, so that the UE remains in an active state within a timing period according to the timing instruction; and
the processor performs data resynchronization with the UE by using the transceiver within the timing period.

With reference to the fifth aspect, in a first possible implementation manner of the fifth aspect,
the processor is specifically configured to determine whether a moment at which the base station performs downlink communication with the UE is in an active period of the UE; and if the moment is in the active period of the UE, determine that a current moment is the moment at which the UE is in an active state; or if the moment is not in the active period of the UE, query for an active period of the UE nearest to the current moment, and use a moment at which the latest active period of the UE arrives as the moment at which the UE is in an active state.

With reference to the first possible implementation manner of the fifth aspect, in a second possible implementation manner of the fifth aspect,
the processor is further configured to generate a physical downlink control channel PDCCH timing instruction; and
the transceiver is further configured to send the PDCCH timing instruction to the UE at the moment at which the UE is in an active state.

With reference to the second possible implementation manner of the fifth aspect, in a third possible implementation manner of the fifth aspect,
the processor is further configured to generate a resynchronization instruction according to the channel preamble, where the resynchronization instruction is used to instruct the UE to perform data resynchronization with the base station; and
the transceiver is further configured to acquire the channel preamble within the timing period; and send the resynchronization instruction to the UE through a PDCCH.

With reference to the third possible implementation manner of the fifth aspect, in a fourth possible implementation manner of the fifth aspect, the base station further includes a long timer connected to the processor, where
the processor sends an asynchronous indication to the UE through a UM interface or a UU interface, and triggers the long timer, so that the UE starts the long timer according to the asynchronous indication, and enters an asynchronous discontinuous reception DRX operation mode.

According to a sixth aspect, an embodiment of the present invention provides user equipment UE, including a processor and a transceiver connected to the processor, where the transceiver is configured to receive, in an active state, a timing instruction sent by a base station, where the timing instruction is used to instruct the UE to remain in an active state within a timing period; and receive, within the timing period, a resynchronization instruction sent by the base station, where the resynchronization instruction is used to instruct the UE to perform data resynchronization with the base station; and
the processor is configured to perform data resynchronization with the base station according to the resynchronization instruction.

With reference to the sixth aspect, in a first possible implementation manner of the sixth aspect, the UE further includes a long timer and an IA timer that are both connected to the processor, where
the processor disables the running long timer according to the timing instruction, and enables the IA timer with the timing period to perform timing, where the long timer is configured to periodically maintain an active state and an idle state of the UE.

With reference to the first possible implementation manner of the sixth aspect, in a second possible implementation manner of the sixth aspect,
the transceiver is further configured to receive an asynchronous indication sent by the base station; and
the processor is further configured to enable the long timer according to the asynchronous indication, and enter an asynchronous discontinuous reception DRX operation mode.

The embodiments of the present invention provide a data resynchronization method and apparatus. A moment at which UE is in an active state is determined, and then a base station generates a timing instruction and notifies the UE of the timing instruction, so that the UE remains in an active state within a timing period according to the timing instruction. In this way, the base station generates a resynchronization instruction in time after obtaining a preamble and sends the resynchronization instruction to the UE, and ensures that the UE receives the resynchronization instruction in an active state to perform data resynchronization with the base station, which resolves a problem in the prior art that when a base station performs resynchronization with UE that is in an idle state, a resynchronization failure occurs because states of the base station and the UE are not synchronous.

### Brief description of drawings

To describe the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a schematic flowchart of data resynchronization in the prior art;
FIG. 2 is schematic diagram 1 of a data resynchronization method according to an embodiment of the present invention;
FIG. 3 is schematic diagram 2 of a data resynchronization method according to an embodiment of the present invention;
FIG. 4 is schematic diagram 3 of a data resynchronization method according to an embodiment of the present invention;
FIG. 5 is a schematic flowchart of data resynchronization according to an embodiment of the present invention;
FIG. 6 is a schematic diagram of hardware of a base station according to an embodiment of the present invention;
FIG. 7 is a schematic diagram of hardware of user equipment according to an embodiment of the present invention;
FIG. 8 is schematic structural diagram 1 of a base station according to an embodiment of the present invention;
FIG. 9 is schematic structural diagram 2 of a base station according to an embodiment of the present invention;
FIG. 10 is schematic structural diagram 1 of user equipment according to an embodiment of the present invention; and
FIG. 11 is schematic structural diagram 2 of user equipment according to an embodiment of the present invention.

### description of embodiments

In the following description, to illustrate rather than limit, specific details such as a particular system structure, an interface, and a technology are provided to make a thorough understanding of the present invention. However, a person skilled in the art should know that the present invention may be practiced in other embodiments without these specific details. In other cases, detailed descriptions of well-known apparatuses, circuits, and methods are omitted, so that the present invention is described without being obscured by unnecessary details.

For the convenience of understanding and describing, several concepts involved in the embodiments of the present invention are introduced first.

Data resynchronization: When a base station needs to transmit downlink data to UE, there are mainly two solutions for resynchronization triggered by the base station, where one is that: when the UE is in an active state, the base station informs, by using an RRC (Radio Resource Control, radio resource control protocol) connection reconfiguration message, the UE of how to perform data resynchronization with the base station; the other solution for resynchronization triggered by the base station is that: when the UE is in an idle state (Idle), that is, when out-of-synchronization occurs between the base station and the UE, the base station needs to wake up the UE from an asynchronous by using a PDCCH, to complete data resynchronization. However, the embodiments of the present invention mainly describe a data resynchronization method when the UE is in an asynchronous.

DRX (Discontinuous Reception, discontinuous reception) is one of key technologies used by UE to save power. UE in a DRX operation mode does not continuously receive data, and the UE in the DRX operation mode has an idle state and an active state, which can effectively reduce energy consumption of the UE. In the DRX operation mode, when the UE is in an active state, the UE can normally receive data delivered by a base station; when the UE is in an idle state, the UE cannot perform monitoring. In an idle state, the UE disables a radio frequency and receiving system, so that the UE is in a power saving state.

Further, the DRX may be classified into normal DRX and asynchronous DRX, and the asynchronous DRX is also referred to as dynamic DRX. Even though more power is saved in a longer sleep period, a service processing delay is also prolonged; therefore, the foregoing two types of impact are generally considered in the normal DRX, and it is set that an interval between an active period and a sleep period is relatively small. However, a longer-period super-long-period asynchronous DRX parameter is introduced to the dynamic DRX, so that the UE can take a longer time to enter the sleep period, and a terminal can save more power; in addition, the base station is dynamically switched between an "active state synchronization DRX parameter" and the "super-long-period asynchronous DRX parameter" by using an inactivity timer and an uplink synchronous timer of the UE, which saves signaling overheads, and balances a loss of power consumption of the UE.

It should be noted that, the data resynchronization method provided in the embodiments of the present invention supports data resynchronization in a normal DRX operation mode, and also supports data resynchronization in an asynchronous DRX operation mode. As shown in FIG. 1, because a period of an idle state of UE in the asynchronous DRX operation mode is much longer than that of an active state, it is very likely that a UE side cannot receive a resynchronization instruction delivered by a base station, leading to a data resynchronization failure, and causing a drop in a resynchronization network access KPI (Key Performance Indicator, key performance indicator). For the foregoing problems, the embodiments of the present invention provide a data resynchronization method and apparatus, which resolves a problem in the prior art that when a base station performs resynchronization with UE that is in an idle state, a data resynchronization failure occurs because the UE cannot effectively receive a preamble delivered by the base station.

### Embodiment 1

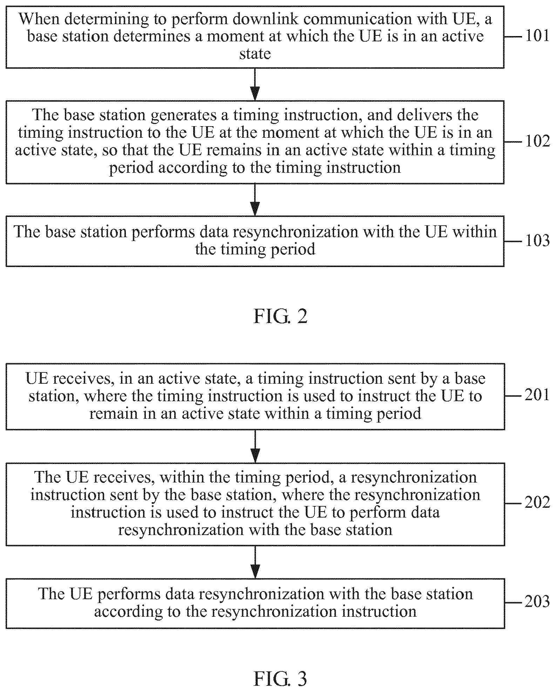

This embodiment of the present invention provides a data resynchronization method. As shown in FIG. 2, the method includes:
101: When determining to perform downlink communication with UE, a base station determines a moment at which the UE is in an active state.
102: The base station generates a timing instruction, and delivers the timing instruction to the UE at the moment at which the UE is in an active state, so that the UE remains in an active state within a timing period according to the timing instruction.
103: The base station performs data resynchronization with the UE within the timing period.

Specifically, in step 101, after the UE enters an asynchronous (for example, enters an asynchronous DRX operation mode), the UE is periodically switched between an idle state and an active state. When the base station receives a paging indication from another base station or the base station needs to deliver downlink data to the UE, the base station first needs to perform a data resynchronization operation with the UE. However, because the UE is in an asynchronous at this moment, the base station first determines whether to perform downlink communication with the UE, and when the base station needs to perform downlink communication with the UE, the base station determines the moment at which the UE is in an active state.

Specifically, the UE entering an asynchronous is periodically switched between an idle state and an active state, and the UE can receive data and an instruction from the base station only when the UE is in an active state. Therefore, after the base station acquires a resynchronization indication, the base station needs to query whether a moment at which the resynchronization indication is acquired is in an active period of the UE. For example, when the UE enters an asynchronous, long timers having a same period are simultaneously started in the base station and the UE, where the long timer is configured to periodically maintain an active state and an idle state of the UE; therefore, the base station can determine whether the UE is currently in an active state or an idle state as long as the base station checks the long timer of the base station after acquiring the resynchronization indication.

If it is in the active period of the UE, the base station determines that a current moment is the moment at which the UE is in an active state; or if it is not in the active period of the UE, the base station queries for an active period of the UE nearest to a current moment, and uses a moment at which the latest active period of the UE arrives as the moment at which the UE is in an active state.

In step 102, after the base station determines the moment at which the UE is in an active state, the base station generates the timing instruction, and delivers the timing instruction to the UE at a latest moment at which the UE enters an active state, so that the UE remains in an active state within the specified timing period according to the timing instruction.

Specifically, the base station may generate a PDCCH timing instruction, and wait for arrival of a latest period of an active state of the UE. When the latest moment at which the UE enters the active state arrives, the base station sends the PDCCH timing instruction to the UE, so that the UE receives the PDCCH timing instruction in an active state, and remains in an active state within a timing period specified in the PDCCH timing instruction. In this way, the base station prolongs a period of an active state of the UE in an asynchronous, and greatly improves a success rate of receiving, by the UE, the resynchronization indication delivered by the base station; therefore, the base station and the UE successfully complete a data resynchronization operation in a synchronized state.

In step 103, after the base station delivers the timing instruction to the UE, the base station correspondingly acquires a channel preamble within the timing period indicated by the timing instruction, and then generates a resynchronization instruction according to the channel preamble and delivers the resynchronization instruction to the UE, where the resynchronization instruction is used to instruct the UE to perform a data resynchronization operation with the base station.

Specifically, after the base station delivers the timing instruction to the UE, the base station may also trigger a same timer in the base station, to ensure that a preamble is applied for within the same timing period. After the base station acquires the preamble, because the UE is also in an active state in the same timing period, the base station may generate the resynchronization instruction according to the preamble and directly send the resynchronization instruction to the UE, to ensure time validity of the preamble, which is different from the prior art in which after acquiring a preamble, a base station cannot deliver the preamble until a next active state of UE arrives, and because a wireless resource such as the preamble is set to be time-limited, the preamble is considered invalid after a time period elapses and it is required to apply for the preamble again. Therefore, in the prior art, the base station cannot deliver the preamble until a next active state of the UE arrives, which likely leads to invalidity of the preamble, causing a data resynchronization failure.

The base station forwards the generated resynchronization instruction to the UE, so that the UE receives the resynchronization instruction in an active state, to complete data resynchronization.

Specifically, a data resynchronization operation performed between the base station and the UE can be completed by using the prior art. However, because the UE receives the resynchronization instruction in an active state, validity of the resynchronization instruction can be ensured, and therefore, a success rate of data resynchronization is improved.

This embodiment of the present invention provides a data resynchronization method. A moment at which UE is in an active state is determined, and then a base station generates a timing instruction and notifies the UE of the timing instruction, so that the UE remains in an active state within a timing period according to the timing instruction. In this way, the base station generates a resynchronization instruction in time after obtaining a preamble and sends the resynchronization instruction to the UE, ensures time validity of the preamble, and ensures that the UE receives the resynchronization instruction in an active state to perform data resynchronization with the base station, which resolves a problem in the prior art that when a base station performs resynchronization with UE that is in an idle state, a data resynchronization failure occurs because the UE cannot effectively receive a preamble delivered by the base station.

An embodiment of the present invention provides a data resynchronization method. As shown in FIG. 3, the method includes:
201: UE receives, in an active state, a timing instruction sent by a base station, where the timing instruction is used to instruct the UE to remain in an active state within a timing period.
202: The UE receives, within the timing period, a resynchronization instruction sent by the base station, where the resynchronization instruction is used to instruct the UE to perform data resynchronization with the base station.
203: The UE performs data resynchronization with the base station according to the resynchronization instruction.

Specifically, in step 201, after the UE receives an asynchronous indication delivered by the base station, the UE enables a long timer according to the asynchronous indication and enters an asynchronous (for example, an asynchronous DRX operation mode). In this case, the UE may start the long timer and is periodically switched between an idle state and an active state. If the base station needs to send downlink data, the base station determines a moment at which the UE enters an active state and generates the timing instruction, and the UE receives, in an active state, the timing instruction sent by the base station, where the timing instruction is used to instruct the UE to remain in an active state within the timing period.

Specifically, after receiving, in an active state, the timing instruction sent by the base station, the UE may disable the running long timer according to the timing instruction, and enable an IA (inactivity) timer (which may be referred to as an extended timer) with the timing period to perform timing, where the long timer is configured to periodically maintain an active state and an idle state of the UE, and the IA timer is configured to instruct the UE to remain in an active state within the timing period.

In step 202, within the timing period indicated by the timing instruction, the UE receives the resynchronization instruction sent by the base station, where the resynchronization instruction is used to instruct the UE to perform data resynchronization with the base station.

Specifically, after receiving the timing instruction sent by the base station, the UE remains in an active state within the timing period. Within the same timing period, the base station acquires a valid preamble, generates the resynchronization instruction, and delivers the resynchronization instruction to the UE, to instruct the UE to perform a data resynchronization operation. In this way, the base station prolongs a period of an active state of the UE in an asynchronous, and greatly improves a success rate of receiving, by the UE, a resynchronization indication delivered by the base station; therefore, the base station and the UE successfully complete a data resynchronization operation in a synchronized state.

In step 203, after receiving the resynchronization instruction sent by the base station, the UE performs data resynchronization with the base station according to the resynchronization instruction, which ensures that the data resynchronization operation can be effectively performed in an active state of the UE.

This embodiment of the present invention provides a data resynchronization method. A moment at which UE is in an active state is determined, and then a base station generates a timing instruction and notifies the UE of the timing instruction, so that the UE remains in an active state within a timing period according to the timing instruction. In this way, the base station generates a resynchronization instruction in time after obtaining a preamble and sends the resynchronization instruction to the UE, ensures time validity of the preamble, and ensures that the UE receives the resynchronization instruction in an active state to perform data resynchronization with the base station, which resolves a problem in the prior art that when a base station performs resynchronization with UE that is in an idle state, a data resynchronization failure occurs because the UE cannot effectively receive a preamble delivered by the base station.

### Embodiment 2

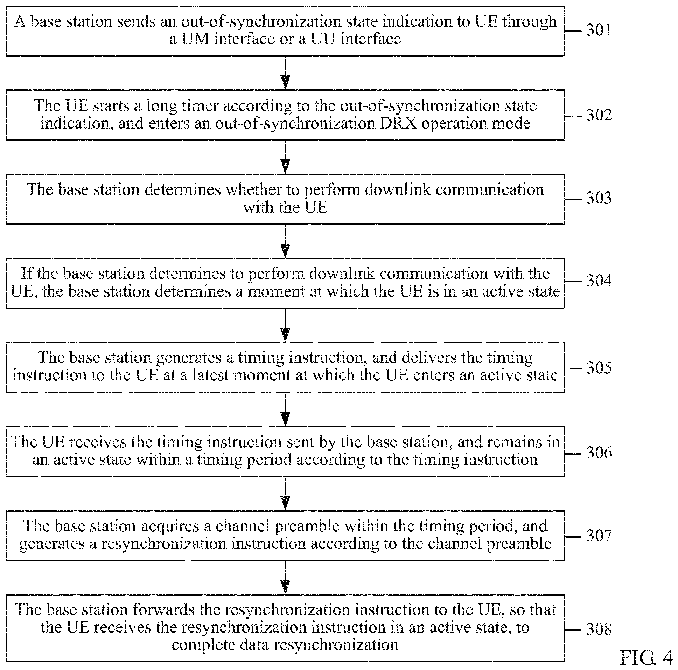

An embodiment of the present invention provides a data resynchronization method. As shown in FIG. 4, the method includes:
301: A base station sends an asynchronous indication to UE through a UM interface or a UU interface.
302: The UE starts a long timer according to the asynchronous indication, and enters an asynchronous DRX operation mode.
303: The base station determines whether to perform downlink communication with the UE.
304: If the base station determines to perform downlink communication with the UE, the base station determines a moment at which the UE is in an active state.
305: The base station generates a timing instruction, and delivers the timing instruction to the UE at a latest moment at which the UE enters an active state.
306: The UE receives the timing instruction sent by the base station, and remains in an active state within a timing period according to the timing instruction.
307: The base station acquires a channel preamble within the timing period, and generates a resynchronization instruction according to the channel preamble.
308: The base station forwards the resynchronization instruction to the UE, so that the UE receives the resynchronization instruction in an active state, to complete data resynchronization.

Specifically, in step 301, for many UEs (especially, a smartphone), to make UE save more power, and give up a quota of "a quantity of activated users" that is occupied by the UE (a quantity of users that go online simultaneously is limited, and it is impossible to accommodate infinite users), the UE needs to enter an asynchronous as quickly as possible, so that the UE is periodically switched between an idle state and an active state. In this case, the base station sends the asynchronous indication to the UE through the UM interface or the UU interface, to instruct the UE to enter a normal DRX state or an asynchronous DRX state.

The UU interface is the most important interface in a WCDMA system, and is mainly used for important functions, such as broadcasting and paging, processing an RRC connection, and processing management and control information of a wireless resource. The base station interacts with the UE by receiving and sending an air interface message through the UU interface. It should be noted that a delay may exist in receiving and sending of the air interface message. Because an active state of the UE is very short, the delay of the air interface message may also cause a data resynchronization failure.

In step 302, the UE starts the long timer according to the asynchronous indication sent by the base station, and enters the asynchronous DRX operation mode. In this case, the long timer periodically maintains an active state and an idle state of the UE.

In step 303, when the base station needs to perform a broadcasting and paging indication or deliver downlink data to the UE, the base station may determine whether to perform downlink communication with the UE (for details, refer to step 101 in Embodiment 1).

In step 304, when determining to perform downlink communication with the UE, the base station further determines the moment at which the UE is in an active state.

Specifically, when the UE enters an asynchronous, long timers having a same period are simultaneously started in the base station and the UE, where the long timer is configured to periodically maintain an active state and an idle state of the UE; therefore, the base station can determine whether the UE is currently in an active state or an idle state as long as the base station checks the long timer of the base station after acquiring a resynchronization indication.

If it is in an active period of the UE, the base station determines that a current moment is the moment at which the UE is in an active state; or if it is not in an active period of the UE, the base station queries for an active period of the UE nearest to a current moment, and uses a moment at which the latest active period of the UE arrives as the moment at which the UE is in an active state.

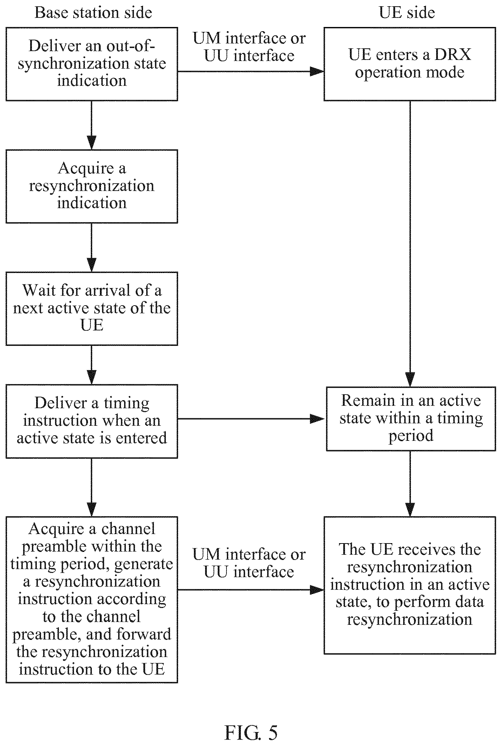

In step 305, FIG. 5 is a schematic flowchart of data resynchronization according to an embodiment of the present invention. After determining the moment at which the UE is in an active state, the base station waits for arrival of a latest period of an active state of the UE. When a latest moment at which the UE enters an active state arrives, the base station sends a PDCCH timing instruction to the UE, so that the UE receives the PDCCH timing instruction in an active state, and remains in an active state within a timing period specified in the PDCCH timing instruction.

In step 306, the UE receives the timing instruction sent by the base station, and remains in an active state within the timing period according to the timing instruction.

Specifically, the UE may disable the running long timer according to the timing instruction, and enable an IA timer with the timing period to perform timing, where the long timer is configured to periodically maintain an active state and an idle state of the UE, and the IA timer is configured to instruct the UE to remain in an active state within the timing period. In this way, the base station prolongs a period of an active state of the UE in an asynchronous, and greatly improves a success rate of receiving, by the UE, the resynchronization indication delivered by the base station; therefore, the base station and the UE successfully complete a data resynchronization operation in a synchronized state.

In step 307, when the UE remains in an active state within the timing period according to the timing instruction, the base station acquires the channel preamble within the timing period and generates the resynchronization instruction according to the channel preamble.

Specifically, after the base station delivers the timing instruction to the UE, the base station may also trigger a same IA timer in the base station, to ensure that a preamble is applied for within the timing period of the same IA timer. After the base station acquires the preamble, because the UE is also in an active state in the same timing period at this moment, the base station may generate the resynchronization instruction according to the preamble and directly send the resynchronization instruction to the UE, to ensure time validity of the preamble.

In step 308, the base station forwards the resynchronization instruction to the UE, so that the UE receives the resynchronization instruction in an active state, to complete data resynchronization, which ensures that the data resynchronization operation can be effectively performed in an active state of the UE.

This embodiment of the present invention provides a data resynchronization method. A moment at which UE is in an active state is determined, and then a base station generates a timing instruction and notifies the UE of the timing instruction, so that the UE remains in an active state within a timing period according to the timing instruction. In this way, the base station generates a resynchronization instruction in time after obtaining a preamble and sends the resynchronization instruction to the UE, ensures time validity of the preamble, and ensures that the UE receives the resynchronization instruction in an active state to perform data resynchronization with the base station, which resolves a problem in the prior art that when a base station performs resynchronization with UE that is in an idle state, a data resynchronization failure occurs because the UE cannot effectively receive a preamble delivered by the base station.

### Embodiment 3

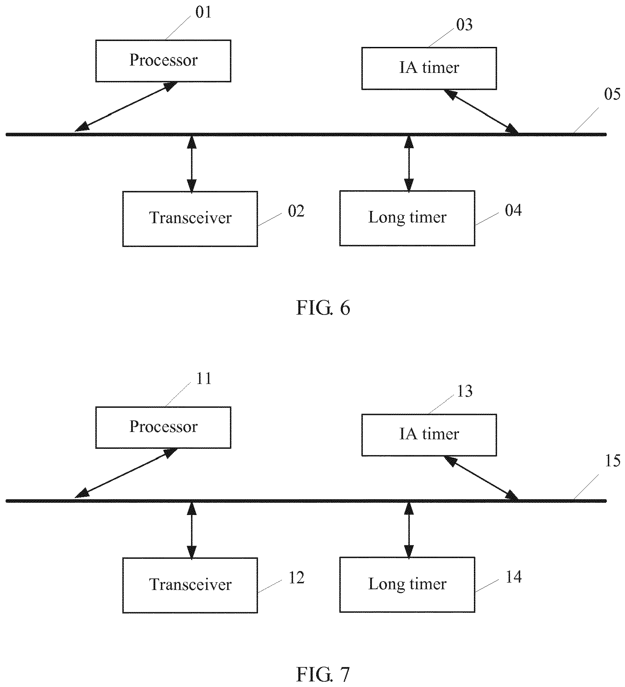

FIG. 6 is a schematic diagram of hardware of a base station according to an embodiment of the present invention.

As shown in FIG. 6, a server includes a processor 01, a transceiver 02, an IA timer 03, a long timer 04, and a bus 05.

The processor 01, the transceiver 02, the IA timer 03, and the long timer 04 are connected in a communication manner by using the bus 05.

The processor 01 is a control center of the base station, and the processor 01 executes various functions of the base station by processing data received by the transceiver 02, and invoking software or a program in the transceiver 02 or a memory.

The transceiver 02 may be configured to receive and send information, or receive and send a signal in a communication process. After receiving information sent by a terminal, the transceiver 02 sends the information to the processor 01 for processing. In addition, the transceiver 02 may also communicate with a network and another device by means of wireless communication.

The IA (inactivity) timer 03 may be referred to as an extended timer or an inactivity timer, and is a wakeup timer inside the base station or UE. When new data arrives at the UE in an active state, the IA timer 03 performs extension and starts timing.

The long timer 04 is a timer started by the base station when an asynchronous of the UE is triggered. Long timers may be set in both the base station and the UE, and are configured to periodically maintain an asynchronous of the UE, so that the UE may be switched between an active state and an idle state at a fixed moment, and the base station synchronously learns a current state of the UE.

In this embodiment of the present invention, the transceiver 02 acquires a resynchronization indication, where the resynchronization indication is used to instruct the base station to wake up the user equipment UE in an asynchronous, to complete data resynchronization with the UE; the processor 01 determines, according to a moment at which the transceiver 02 acquires the resynchronization indication, a moment at which the UE is in an active state; the processor 01 invokes the IA timer 03 to generate a timing instruction, and delivers the timing instruction to the UE by using the transceiver 02 at a latest moment at which the UE enters an active state, so that the UE remains in an active state within a timing period according to the timing instruction; the processor 01 acquires a channel preamble by using the transceiver 02 within the timing period, generates a resynchronization instruction, and forwards the resynchronization instruction to the UE, so that the UE receives the resynchronization instruction in an active state, to complete data resynchronization.

Further, when determining the moment at which the UE is in an active state, the processor 01 is specifically configured to query whether the moment at which the resynchronization indication is acquired is in an active period of the UE; and if the moment at which the resynchronization indication is acquired is in the active period of the UE, the processor 01 determines that a current moment is the moment at which the UE is in an active state; or if the moment at which the resynchronization indication is acquired is not in the active period of the UE, the processor 01 queries for an active period of the UE nearest to a current moment, and uses a moment at which the latest active period of the UE arrives as the moment at which the UE is in an active state.

Further, the processor 01 is further configured to generate a physical downlink control channel PDCCH timing instruction; and
the transceiver 02 is further configured to send the PDCCH timing instruction to the UE at the latest moment at which the UE enters an active state.

Further, the processor 01 is further configured to generate a resynchronization instruction according to the channel preamble, where the resynchronization instruction is used to instruct the UE to perform data resynchronization with the base station; and
the transceiver 02 is further configured to acquire the channel preamble from a network layer L3 within the timing period; and send the resynchronization instruction to the UE through a PDCCH.

Further, before the transceiver 02 acquires the resynchronization indication, the processor 01 may send an asynchronous indication to the UE through a UM interface or a UU interface, and trigger the long timer 04, so that the UE starts the long timer 04 according to the asynchronous indication, and enters an asynchronous discontinuous reception DRX operation mode.

This embodiment of the present invention provides a base station. A moment at which UE is in an active state is determined, and then the base station generates a timing instruction and notifies the UE of the timing instruction, so that the UE remains in an active state within a timing period according to the timing instruction. In this way, the base station generates a resynchronization instruction in time after obtaining a preamble and sends the resynchronization instruction to the UE, and ensures that the UE receives the resynchronization instruction in an active state to perform data resynchronization with the base station, which resolves a problem in the prior art that when a base station performs resynchronization with UE that is in an idle state, a data resynchronization failure occurs because the UE cannot effectively receive a preamble delivered by the base station.

FIG. 7 is a schematic diagram of hardware of user equipment UE according to an embodiment of the present invention.

As shown in FIG. 7, the UE includes a processor 11, a transceiver 12, an IA timer 13, a long timer 14, and a bus 15.

The processor 11, the transceiver 12, the IA timer 13, and the long timer 14 are connected in a communication manner by using the bus 15.

The processor 11 is a control center of the UE, and the processor 11 executes various functions of the UE by processing data received by the transceiver 12, and invoking software or a program in the transceiver 12 or a memory.

The transceiver 12 may be configured to receive and send information, or receive and send a signal in a communication process. After receiving information sent by a terminal, the transceiver 12 sends the information to the processor 11 for processing. In addition, the transceiver 12 may also communicate with a network and another device by wireless communication.

The IA timer 03 may be referred to as an extended timer or an inactivity timer, and is a wakeup timer inside a base station or the UE. When new data arrives at the UE in an active state, the IA timer performs extension and starts timing.

The long timer 14 is a timer started by the base station when an asynchronous of the UE is triggered. Long timers may be set in both the base station and the UE, and are configured to periodically maintain an asynchronous of the UE, so that the UE may be switched between an active state and an idle state at a fixed moment, and the base station synchronously learns a current state of the UE.

In this embodiment of the present invention, the transceiver 12 is configured to receive, in an active state, a timing instruction sent by the base station, where the timing instruction is used to instruct the UE to remain in an active state within a timing period; and receive, within the timing period, a resynchronization instruction sent by the base station, where the resynchronization instruction is used to instruct the UE to perform data resynchronization with the base station; and the processor 11 is configured to perform data resynchronization with the base station according to the resynchronization instruction sent by the transceiver 12.

Further, after the transceiver 12 receives, in an active state, the timing instruction sent by the base station, the processor 11 may further disable the running long timer 14 according to the timing instruction, and enable the IA timer 13 with the timing period to perform timing, where the long timer 14 is configured to periodically maintain an active state and an idle state of the UE.

Further, the transceiver 12 is further configured to receive an asynchronous indication sent by the base station; and
the processor 11 is further configured to enable the long timer 14 according to the asynchronous indication, and enter an asynchronous discontinuous reception DRX operation mode.

This embodiment of the present invention provides user equipment. A moment at which the UE is in an active state is determined, and then a base station generates a timing instruction and notifies the UE of the timing instruction, so that the UE remains in an active state within a timing period according to the timing instruction. In this way, the base station generates a resynchronization instruction in time after obtaining a preamble and sends the resynchronization instruction to the UE, and ensures that the UE receives the resynchronization instruction in an active state to perform data resynchronization with the base station, which resolves a problem in the prior art that when a base station performs resynchronization with UE that is in an idle state, a data resynchronization failure occurs because the UE cannot effectively receive a preamble delivered by the base station.

### Embodiment 4

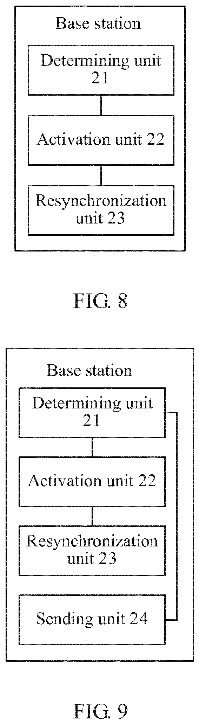

An embodiment of the present invention provides a base station. As shown in FIG. 8, the base station includes:
a determining unit 21, configured to: when determining to perform downlink communication with user equipment UE, determine a moment at which the UE is in an active state;
an activation unit 22, configured to generate a timing instruction, and deliver the timing instruction to the UE at the moment at which the UE is in an active state that is determined by the determining unit 21, so that the UE remains in an active state within a timing period according to the timing instruction; and
a resynchronization unit 23, configured to perform data resynchronization with the UE within the timing period in the activation unit 22.

Further, the determining unit 21 is specifically configured to determine, by querying, whether a moment at which the base station performs downlink communication with the UE is in an active period of the UE; and if the moment is in the active period of the UE, determine that a current moment is the moment at which the UE is in an active state; or if the moment is not in the active period of the UE, query for an active period of the UE nearest to a current moment, and use a moment at which the latest active period of the UE arrives as the moment at which the UE is in an active state.

Further, the activation unit 22 is specifically configured to generate a physical downlink control channel PDCCH timing instruction; and send the PDCCH timing instruction to the UE at the moment at which the UE is in an active state.

Further, the resynchronization unit 23 is specifically configured to acquire a channel preamble within the timing period; generate a resynchronization instruction according to the channel preamble, where the resynchronization instruction is used to instruct the UE to perform data resynchronization with the base station; and send the resynchronization instruction to the UE through a PDCCH, so that the UE performs data resynchronization with the base station according to the channel preamble in the resynchronization instruction.

Further, as shown in FIG. 9, the base station further includes a sending unit 24, where
the sending unit 24 is configured to send an asynchronous indication to the UE through a UM interface or a UU interface, and trigger a long timer, so that the UE starts the long timer according to the asynchronous indication, and enters an asynchronous discontinuous reception DRX operation mode.

This embodiment of the present invention provides a data resynchronization apparatus. A moment at which UE is in an active state is determined, and then a base station generates a timing instruction and notifies the UE of the timing instruction, so that the UE remains in an active state within a timing period according to the timing instruction. In this way, the base station generates a resynchronization instruction in time after obtaining a preamble and sends the resynchronization instruction to the UE, and ensures that the UE receives the resynchronization instruction in an active state to perform data resynchronization with the base station, which resolves a problem in the prior art that when a base station performs resynchronization with UE that is in an idle state, a data resynchronization failure occurs because the UE cannot effectively receive a preamble delivered by the base station.

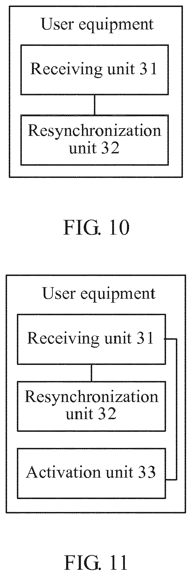

An embodiment of the present invention provides user equipment UE. As shown in FIG. 10, the user equipment includes:
a receiving unit 31, configured to receive, in an active state, a timing instruction sent by a base station, where the timing instruction is used to instruct the UE to remain in an active state within a timing period; and receive, within the timing period, a resynchronization instruction sent by the base station, where the resynchronization instruction is used to instruct the UE to perform data resynchronization with the base station; and
a resynchronization unit 32, configured to perform data resynchronization with the base station according to the resynchronization instruction in the receiving unit 31.

Further, as shown in FIG. 11, the UE further includes an activation unit 33, where
the activation unit 33 is configured to disable a running long timer according to the timing instruction in the receiving unit 31, and enable an IA timer with the timing period to perform timing, where the long timer is configured to periodically maintain an active state and an idle state of the UE.

Further, the receiving unit 31 is further configured to receive an asynchronous indication sent by the base station; and
the resynchronization unit 32 is further configured to enable the long timer according to the asynchronous indication in the receiving unit 31, and enter an asynchronous discontinuous reception DRX operation mode.

This embodiment of the present invention provides a data resynchronization apparatus. A moment at which UE is in an active state is determined, and then a base station generates a timing instruction and notifies the UE of the timing instruction, so that the UE remains in an active state within a timing period according to the timing instruction. In this way, the base station generates a resynchronization instruction in time after obtaining a preamble and sends the resynchronization instruction to the UE, and ensures that the UE receives the resynchronization instruction in an active state to perform data resynchronization with the base station, which resolves a problem in the prior art that when a base station performs resynchronization with UE that is in an idle state, a data resynchronization failure occurs because the UE cannot effectively receive a preamble delivered by the base station.

In the foregoing embodiments of this specification, various aspects are described with reference to a terminal and/or a base station.

The user equipment UE may be a wireless terminal or a wired terminal. The wireless terminal may refer to a device that provides a user with voice and/or data connectivity, a handheld device with a radio connection function, or another processing device connected to a radio modem. The wireless terminal may communicate with one or more core networks by using a radio access network (such as RAN, Radio Access Network). The wireless terminal may be a mobile terminal, such as a mobile phone (which is also referred to as a "cellular" phone) and a computer with a mobile terminal, for example, may be a portable, pocket-sized, handheld, computer built-in, or in-vehicle mobile apparatus, which exchanges voice and/or data with the radio access network. For example, it may be a device such as a personal communication service (PCS, Personal Communication Service) phone, a cordless telephone set, a Session Initiation Protocol (SIP) phone, a wireless local loop (WLL, Wireless Local Loop) station, or a personal digital assistant (PDA, Personal Digital Assistant). The wireless terminal may also be called a system, a subscriber unit (Subscriber Unit), a subscriber station (Subscriber Station), a mobile station (Mobile Station), a mobile terminal (Mobile), a remote station (Remote Station), an access point (Access Point), a remote terminal (Remote Terminal), an access terminal (Access Terminal), a user terminal (User Terminal), a user agent (User Agent), a user device (User Device), or user equipment (User Equipment).

The base station (for example, an access point) may refer to a device that communicates with a wireless terminal by using one or more sectors at an air interface in an access network. The base station may be configured to mutually convert a received over-the-air frame and an IP packet and serve as a router between the wireless terminal and a remaining portion of the access network, where the remaining portion of the access network may include an Internet protocol (IP) network. The base station may also coordinate attribute management of the air interface. For example, the base station may be a base station (BTS, Base Transceiver Station) in GSM or CDMA, may be a base station (NodeB) in WCDMA, or may be an evolved NodeB (NodeB, eNB, or e-NodeB, evolutional Node B) in LTE, which is not limited in the present invention.

It may be clearly understood by a person skilled in the art that, for the purpose of convenient and brief description, division of the foregoing functional modules is taken as an example for illustration. In actual application, the foregoing functions can be allocated to different functional modules and implemented according to a requirement, that is, an inner structure of an apparatus is divided into different functional modules to implement all or some of the functions described above. For a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely exemplary. For example, the module or unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present invention essentially, or the part contributing to the prior art, or all or some of the technical solutions may be implemented in the form of a software product. The software product is stored in a storage medium and includes several instructions for instructing a computer device (which may be a personal computer, a server, or a network device) or a processor (processor) to perform all or some of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific implementation manners of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A data resynchronization method, comprising:
when determining to perform downlink communication with user equipment UE, determining, by a base station, a moment at which the UE is in an active state;
generating, by the base station, a timing instruction, and delivering the timing instruction to the UE at the moment at which the UE is in an active state, so that the UE remains in an active state within a timing period according to the timing instruction; and
performing, by the base station, data resynchronization with the UE within the timing period.

2. The method according to claim 1, wherein the determining a moment at which the UE is in an active state comprises:
determining, by the base station by querying, whether a moment at which the base station performs downlink communication with the UE is in an active period of the UE; and
if the moment is in the active period of the UE, determining, by the base station, that a current moment is the moment at which the UE is in an active state; or
if the moment is not in the active period of the UE, querying, by the base station, for an active period of the UE nearest to the current moment, and using a moment at which the latest active period of the UE arrives as the moment at which the UE is in an active state.

3. The method according to claim 2, wherein the generating, by the base station, a timing instruction, and delivering the timing instruction to the UE at the moment at which the UE is in an active state, so that the UE remains in an active state within a timing period according to the timing instruction comprises:
generating, by the base station, a physical downlink control channel PDCCH timing instruction; and
sending, by the base station, the PDCCH timing instruction to the UE at the moment at which the UE is in an active state, wherein
the remaining, by the UE, in an active state within a timing period according to the timing instruction comprises:
receiving, by the UE, the PDCCH timing instruction sent by the base station;
disabling, by the UE, a running long timer according to the PDCCH timing instruction, and enabling an extended IA timer with the timing period to perform timing, wherein the long timer is configured to periodically maintain an active state and an idle state of the UE; and
remaining, by the UE, in an active state within the timing period.

4. The method according to claim 3, wherein the performing, by the base station, data resynchronization with the UE within the timing period comprises:
acquiring, by the base station, a channel preamble within the timing period;
generating, by the base station, a resynchronization instruction according to the channel preamble, wherein the resynchronization instruction is used to instruct the UE to perform data resynchronization with the base station; and
sending, by the base station, the resynchronization instruction to the UE through the PDCCH, so that the UE performs data resynchronization with the base station according to the channel preamble in the resynchronization instruction.

5. The method according to claim 4, wherein before the base station determines to perform downlink communication with the UE, the method further comprises:
sending, by the base station, an asynchronous indication to the UE through a UM interface or a UU interface, and triggering the long timer, so that the UE starts the long timer according to the asynchronous indication, and enters an asynchronous discontinuous reception DRX operation mode.

6. A data resynchronization method, comprising:
receiving, by user equipment UE in an active state, a timing instruction sent by a base station, wherein the timing instruction is used to instruct the UE to remain in an active state within a timing period;
receiving, by the UE within the timing period, a resynchronization instruction sent by the base station, wherein the resynchronization instruction is used to instruct the UE to perform data resynchronization with the base station; and
performing, by the UE, the data resynchronization with the base station according to the resynchronization instruction.

7. The method according to claim 6, wherein after the receiving, by UE in an active state, a timing instruction sent by a base station, the method further comprises:
disabling, by the UE, a running long timer according to the timing instruction, and enabling an IA timer with the timing period to perform timing, wherein the long timer is configured to periodically maintain an active state and an idle state of the UE.

8. The method according to claim 6, wherein before the receiving, by UE in an active state, a timing instruction sent by a base station, the method further comprises:
receiving, by the UE, an asynchronous indication sent by the base station; and
enabling, by the UE, the long timer according to the asynchronous indication, and entering an asynchronous discontinuous reception DRX operation mode.

9. Abase station, comprising:
a determining unit, configured to: when determining to perform downlink communication with user equipment UE, determine a moment at which the UE is in an active state;
an activation unit, configured to generate a timing instruction, and deliver the timing instruction to the UE at the moment at which the UE is in an active state, so that the UE remains in an active state within a timing period according to the timing instruction; and
a resynchronization unit, configured to perform data resynchronization with the UE within the timing period.

10. The base station according to claim 9, wherein
the determining unit is specifically configured to determine, by querying, whether a moment at which the base station performs downlink communication with the UE is in an active period of the UE; and if the moment is in the active period of the UE, determine that a current moment is the moment at which the UE is in an active state; or if the moment is not in the active period of the UE, query for an active period of the UE nearest to the current moment, and use a moment at which the latest active period of the UE arrives as the moment at which the UE is in an active state.

11. The base station according to claim 10, wherein
the activation unit is specifically configured to generate a physical downlink control channel PDCCH timing instruction; and send the PDCCH timing instruction to the UE at the moment at which the UE is in an active state.

12. The base station according to claim 11, wherein
the resynchronization unit is specifically configured to acquire a channel preamble within the timing period; generate a resynchronization instruction according to the channel preamble, wherein the resynchronization instruction is used to instruct the UE to perform data resynchronization with the base station; and send the resynchronization instruction to the UE through a PDCCH, so that the UE performs data resynchronization with the base station according to the channel preamble in the resynchronization instruction.

13. The base station according to claim 12, wherein the base station further comprises a sending unit, wherein
the sending unit is configured to send an asynchronous indication to the UE through a UM interface or a UU interface, and trigger the long timer, so that the UE starts the long timer according to the asynchronous indication, and enters an asynchronous discontinuous reception DRX operation mode.

14. User equipment UE, comprising:
a receiving unit, configured to receive, in an active state, a timing instruction sent by a base station, wherein the timing instruction is used to instruct the UE to remain in an active state within a timing period; and receive, within the timing period, a resynchronization instruction sent by the base station, wherein the resynchronization instruction is used to instruct the UE to perform data resynchronization with the base station; and
a resynchronization unit, configured to perform data resynchronization with the base station according to the resynchronization instruction in the receiving unit.

15. The UE according to claim 14, wherein the UE further comprises an activation unit, wherein
the activation unit is configured to disable a running long timer according to the timing instruction in the receiving unit, and enable an IA timer with the timing period to perform timing, wherein the long timer is configured to periodically maintain an active state and an idle state of the UE.

16. The UE according to claim 14, wherein
the receiving unit is further configured to receive an asynchronous indication sent by the base station; and
the resynchronization unit is further configured to enable the long timer according to the asynchronous indication in the receiving unit, and enter an asynchronous discontinuous reception DRX operation mode.

17. A base station, comprising a processor, and a transceiver and an IA timer that are both connected to the processor, wherein
when determining to perform downlink communication with user equipment UE, the processor determines a moment at which the UE is in an active state;
the processor invokes the IA timer to generate a timing instruction, and delivers, by using the transceiver, the timing instruction to the UE at the moment at which the UE is in an active state, so that the UE remains in an active state within a timing period according to the timing instruction; and
the processor performs data resynchronization with the UE by using the transceiver within the timing period.

18. The base station according to claim 17, wherein
the processor is specifically configured to determine whether a moment at which the base station performs downlink communication with the UE is in an active period of the UE; and if the moment is in the active period of the UE, determine that a current moment is the moment at which the UE is in an active state; or if the moment is not in the active period of the UE, query for an active period of the UE nearest to the current moment, and use a moment at which the latest active period of the UE arrives as the moment at which the UE is in an active state.

19. The base station according to claim 18, wherein
the processor is further configured to generate a physical downlink control channel PDCCH timing instruction; and
the transceiver is further configured to send the PDCCH timing instruction to the UE at the moment at which the UE is in an active state.

20. The base station according to claim 19, wherein
the processor is further configured to generate a resynchronization instruction according to the channel preamble, wherein the resynchronization instruction is used to instruct the UE to perform data resynchronization with the base station; and
the transceiver is further configured to acquire the channel preamble within the timing period; and send the resynchronization instruction to the UE through a PDCCH.

21. The base station according to claim 19, wherein the base station further comprises a long timer connected to the processor, wherein
the processor sends an asynchronous indication to the UE through a UM interface or a UU interface, and triggers the long timer, so that the UE starts the long timer according to the asynchronous indication, and enters an asynchronous discontinuous reception DRX operation mode.

22. User equipment UE, comprising a processor and a transceiver connected to the processor, wherein
the transceiver is configured to receive, in an active state, a timing instruction sent by a base station, wherein the timing instruction is used to instruct the UE to remain in an active state within a timing period; and receive, within the timing period, a resynchronization instruction sent by the base station, wherein the resynchronization instruction is used to instruct the UE to perform data resynchronization with the base station; and
the processor is configured to perform data resynchronization with the base station according to the resynchronization instruction.

23. The UE according to claim 22, wherein the UE further comprises a long timer and an IA timer that are both connected to the processor, wherein
the processor disables the running long timer according to the timing instruction, and enables the IA timer with the timing period to perform timing, wherein the long timer is configured to periodically maintain an active state and an idle state of the UE.

24. The UE according to claim 22, wherein
the transceiver is further configured to receive an asynchronous indication sent by the base station; and
the processor is further configured to enable the long timer according to the asynchronous indication, and enter an asynchronous discontinuous reception DRX operation mode.
